# EUROPÄISCHE PATENTSCHRIFT

(11) **EP 1 188 800 B1**
(45) Veröffentlichungstag und Bekanntmachung des Hinweises auf die Patenterteilung: **03.12.2003**
(21) Anmeldenummer: 01121135.6
(22) Anmeldetag: 04.09.2001
(51) Int. Cl.: C09B 67/48, C09B 33/153

(54) **Kristalline Modifikationen eines gelben Disazo-Farbmittels und Verfahren zu ihrer Herstellung**
Crystal modifications of a yellow disazo colorant and a process for their production
Modifications cristallines d'un colorant disazoique jaune et procédé de leur production

(30) Priorität: 15.09.2000 DE 10045790
(43) Veröffentlichungstag der Anmeldung: 20.03.2002
(73) Patentinhaber: Clariant GmbH, 65929 Frankfurt am Main (DE)
(72) Erfinder: Jung, Rüdiger, Dr., 65779 Kelkheim (DE); Metz, Hans-Joachim, Dr., 64285 Darmstadt (DE); Weber, Joachim, Dr., 65929 Frankfurt am Main (DE); Schmidt, Martin U. Dr., 65931 Frankfurt am Main (DE); Schupp, Olaf, Dr., 65929 Frankfurt am Main (DE); Wacker, Andreas, Dr., 68623 Lampertheim (DE)
(74) Vertreter: Hütter, Klaus, Dr.

(56) Entgegenhaltungen:
- CH-A- 681 154
- DE-A- 2 058 849
- DE-A- 3 501 199
- GB-A- 1 076 635
- GB-A- 2 356 866
- US-A- 5 560 765

## Beschreibung

Die vorliegende Erfindung betrifft neue kristalline Modifikationen (alpha, beta, gamma, delta, zeta und eta) eines gelben Disazo-Farbmittels mit der chemischen Struktur (I), ihre Herstellung und Verwendung als Pigment.

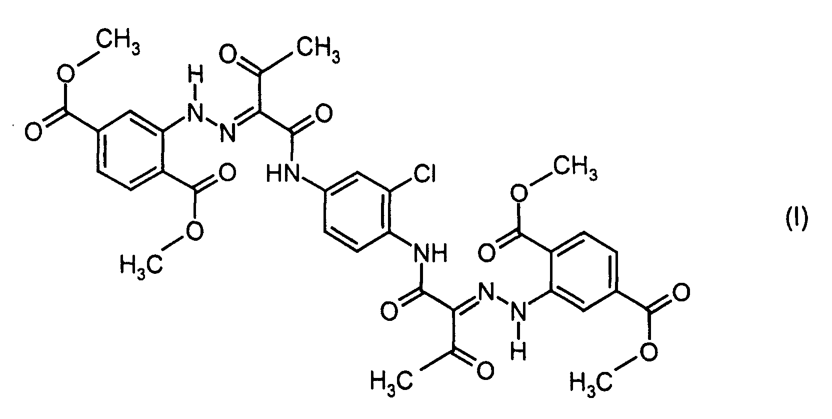

Die meisten organischen Pigmente existieren in mehreren verschiedenen Kristallmodifikationen, auch "polymorphe Formen" genannt. Kristallmodifikationen haben dieselbe chemische Zusammensetzung, aber eine unterschiedliche Anordnung der Bausteine (Moleküle) im Kristall. Die Kristallstruktur bestimmt die chemischen und physikalischen Eigenschaften, daher unterscheiden sich die einzelnen Kristallmodifikationen oftmals in der Rheologie, der Farbe und anderen coloristischen Eigenschaften. Die unterschiedlichen Kristallmodifikationen können durch Röntgenpulverdiffraktometrie identifiziert werden.

Die Verbindung der Formel (I) entsteht durch Kuppeln von einem Äquivalent 2-Chlor-N,N'-1,4-diacetessigphenylendiamin (II) mit zwei Äquivalenten diazotiertem Aminoterephthalsäuredimethylester (III) und ist in der DE-A-2 058 849 beschrieben.

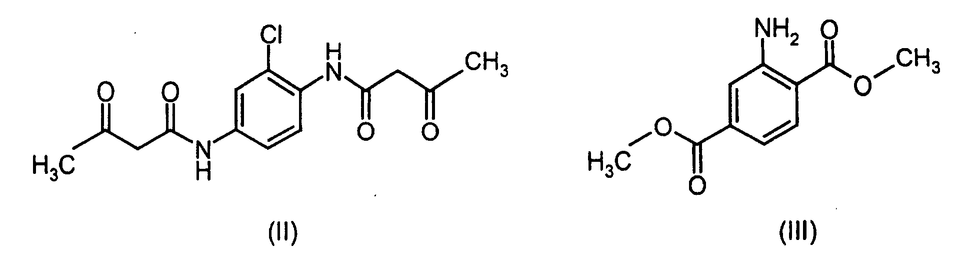

Die CS-A-266 632 beschreibt die Behandlung von amorphen N,N'-1,4-Diacetessigphenylendiaminazopigmenten in C₁₋₃-Alkoholen oder in Wasser bei erhöhten Drücken bis zu 6 bar und 100-150°C. Die Verbindung der Formel (I) wird in den dortigen Beispielen nicht erwähnt.

Nach dem in der DE-A-2 058 849 beschriebenen Verfahren wird die Verbindung der Formel (I) als amorphes Produkt erhalten, dem durch Röntgenpulverdiffraktometrie keine Kristallphase zugeordnet werden kann. Amorphes Rohpigment, das nach der DE-A-2 058 849 erhalten wird, besitzt einen trüben rotstichig-gelben Farbton, ungenügende Farbstärke, schlechte rheologische Eigenschaften sowie ungenügende Lösemittel-, Licht- und Wetterbeständigkeit und ist in dieser Form anwendungstechnisch ohne Interesse.

Unterzieht man das Pigment der Formel (I) einer Lösemittelbehandlung nach dem in CS-A-266 632 beschriebenen Verfahren, so erhält man ein immer noch weitgehend amorphes Produkt, dem keine Kristallmodifikation zugeordnet werden kann und das sich deutlich von den nachstehend beschriebenen erfindungsgemäßen Phasen unterscheidet. Auch Farbton und Eigenschaften des so behandelten Pigmentes bleiben nahezu unverändert und machen das Produkt aus anwendungstechnischer Sicht uninteressant.

Auch in den Dokumenten CH 681 154, GB 2 356 866 sowie DE-A-3 501 199 werden struktur gleiche bzw. -ähnliche Pigmente beschrieben.

Der vorliegenden Erfindung lag daher die Aufgabe zugrunde, die Verbindung der Formel (I) in eine anwendungstechnisch brauchbare Form zu überführen.

Es wurde überraschenderweise gefunden, dass sich durch Behandlung in bestimmten organischen Lösemitteln insgesamt sechs definierte, reine Kristallphasen von (I) erzeugen lassen. Die Modifikationen werden mit α (alpha), β (beta), γ (gamma), δ (delta), ζ (zeta) und η (eta) bezeichnet. Sie zeichnen sich durch folgende charakteristische Linien im Röntgenpulverdiagramm aus (Cu-K_{α}-Strahlung, doppelte Beugungswinkel 2Θ-Werte in Grad, Netzebenenabstände d in Å⁻¹):

| α: | 2Θ | d | relative Intensität |
|---|---|---|---|
| | 6.1 | 14.6 | 100 |
| | 8.2 | 10.8 | 34 |
| | 9.0 | 9.9 | 13 |
| | 14.1 | 6.3 | 15 |
| | 15.2 | 5.8 | 6 |
| | 15.8 | 5.6 | 12 |
| | 17.0 | 5.2 | 6 |
| | 22.1 | 4.0 | 8 |
| | 23.6 | 3.8 | 8 |
| | 24.0 | 3.7 | 15 |
| | 24.8 | 3.6 | 8 |
| | 25.3 | 3.5 | 52 |
| | 26.1 | 3.4 | 29 |
| | 27.3 | 3.3 | 40 |
| | 28.8 | 3.1 | 17 |

| β: | 2Θ | d | relative Intensität |
|---|---|---|---|
| | 9.0 | 21.6 | 44 |
| | 10.6 | 8.3 | 7 |
| | 15.1 | 5.8 | 8 |
| | 16.0 | 5.5 | 6 |
| | 16.5 | 5.4 | 9 |
| | 19.5 | 4.5 | 8 |
| | 22.1 | 4.0 | 11 |
| | 26.9 | 3.3 | 100 |
| | 27.7 | 3.2 | 17 |

| γ: | 2Θ | d | relative Intensität |
|---|---|---|---|
| | 5.9 | 14.9 | 98 |
| | 8.0 | 11.1 | 25 |
| | 8.7 | 10.1 | 9 |
| | 9.6 | 9.2 | 9 |
| | 11.8 | 7.5 | 11 |
| | 13.8 | 6.4 | 14 |
| | 14.9 | 5.9 | 7 |
| | 15.5 | 5.7 | 13 |
| | 16.6 | 5.3 | 11 |
| | 17.6 | 5.0 | 8 |
| | 18.3 | 4.9 | 7 |
| | 22.8 | 3.9 | 9 |
| | 24.1 | 3.7 | 17 |
| | 24.4 | 3.6 | 24 |
| | 25.5 | 3.5 | 100 |
| | 26.1 | 3.4 | 17 |
| | 26.4 | 3.4 | 30 |
| | 27.2 | 3.3 | 32 |
| | 27.4 | 3.2 | 47 |
| | 29.0 | 3.1 | 20 |

| δ: | 2Θ | d | relative Intensität |
|---|---|---|---|
| | 5.8 | 15.2 | 63 |
| | 7.9 | 11.2 | 12 |
| | 9.4 | 9.4 | 6 |
| | 11.6 | 7.6 | 16 |
| | 13.4 | 6.6 | 6 |
| | 15.1 | 5.9 | 9 |
| | 16.4 | 5.4 | 9 |
| | 17.2 | 5.2 | 8 |
| | 18.0 | 4.9 | 8 |
| | 23.2 | 3.8 | 5 |
| | 23.4 | 3.8 | 5 |
| | 23.7 | 3.8 | 7 |
| | 24.3 | 3.7 | 17 |
| | 24.6 | 3.6 | 13 |
| | 25.5 | 3.5 | 100 |
| | 25.8 | 3.4 | 21 |
| | 26.4 | 3.4 | 22 |
| | 26.9 | 3.3 | 22 |
| | 27.3 | 3.3 | 41 |
| | 28.6 | 3.1 | 7 |
| | 28.8 | 3.1 | 11 |

| ζ: | 2Θ | d | relative Intensität |
|---|---|---|---|
| | 7.0 | 12.6 | 7 |
| | 8.9 | 9.9 | 23 |
| | 11.2 | 7.9 | 10 |
| | 11.9 | 7.4 | 48 |
| | 13.2 | 6.7 | 6 |
| | 14.0 | 6.3 | 7 |
| | 15.1 | 5.9 | 26 |
| | 17.2 | 5.1 | 37 |
| | 18.0 | 4.9 | 14 |
| | 18.2 | 4.9 | 27 |
| | 21.5 | 4.1 | 33 |
| | 21.8 | 4.1 | 27 |
| | 22.6 | 3.9 | 13 |
| | 23.9 | 3.7 | 100 |
| | 24.7 | 3.6 | 13 |
| | 25.2 | 3.5 | 17 |
| | 25.9 | 3.4 | 7 |
| | 26.9 | 3.3 | 76 |
| | 27.1 | 3.3 | 92 |
| | 27.8 | 3.2 | 7 |
| | 29.9 | 3.0 | 6 |
| | 31.1 | 2.9 | 7 |
| | 31.7 | 2.8 | 9 |
| | 32.3 | 2.8 | 7 |
| | 33.0 | 2.7 | 8 |

| η: | 2Θ | d | relative Intensität |
|---|---|---|---|
| | 9.0 | 9.9 | 60 |
| | 11.5 | 7.7 | 6 |
| | 14.1 | 6.3 | 6 |
| | 16.0 | 5.5 | 23 |
| | 20.1 | 4.4 | 7 |
| | 21.5 | 4.1 | 16 |
| | 26.8 | 3.3 | 100 |
| | 27.5 | 3.2 | 7 |
| | 27.9 | 3.2 | 12 |

Alle Linienlagen sind mit einer Ungenauigkeit von ± 0,2° behaftet.

Im festen Zustand kann die Verbindung der Formel (I) auch in einer anderen tautomeren und/oder cis/trans-isomeren Form vorliegen.

Alle Modifikationen unterscheiden sich in ihren Röntgenbeugungsdiagrammen und hinsichtlich ihrer Eigenschaften von den Produkten, die nach den bekannten Verfahren aus DE-A-2 058 849 oder CS-A- 266 632 erhalten werden. Die neuen Modifikationen sind schwerlöslich, farbstark und zeichnen sich durch gute Echtheiten und brillante gelbe Färbungen aus.

Gegenstand der vorliegenden Erfindung ist ein Verfahren zur Herstellung kristalliner Modifikationen eines Disazo-Farbmittels der Formel (I), dadurch gekennzeichnet, dass man auf eine Verbindung der Formel (I) oder ein Tautomer, ein cis/trans-Isomer oder ein tautomeres cis/trans-Isomer der Verbindung der Formel (I) ein oder mehrere Lösemittel aus der Gruppe Dimethylformamid, N-Methylpyrrolidon, Dimethylsulfoxid, C₄-C₂₀-Alkohol, 1,2-Dichlorbenzol, Pyridin, Nitrobenzol oder Kombinationen dieser Lösemittel mit Wasser, wobei der Wassergehalt 0 bis 90 Gew.-% betragen kann, bei einer Temperatur von mindestens 100°C einwirken läßt, im folgenden "Lösemittelbehandlung" genannt.

Um eine erfindungsgemäße kristalline Phase der Verbindung der Formel (I) zu erhalten, kann amorphes Rohpigment, eine andere der besagten kristallinen Modifikationen oder ein Gemisch mehrerer kristalliner Modifikationen eingesetzt werden. Die Verbindung der Formel (I) kann dabei z.B. als Trockenpigment, Presskuchen oder in Form einer wässrigen Suspension vorliegen.

Die Lösemittelbehandlung erfolgt bevorzugt bei 135 bis 250°C, besonders bevorzugt bei 150 bis 200°C. Die Dauer der Lösemittelbehandlung beträgt zweckmäßigerweise 1 Minute bis 24 Stunden, vorzugsweise 5 Minuten bis 10 Stunden, insbesondere 10 min bis 5 Stunden. Vor der Isolierung des Pigments wird zweckmäßigerweise auf Raumtemperatur abgekühlt.

Die gelbe α-Modifikation erhält man beispielsweise, wenn man Pigment der Formel (I) in der β-Modifikation bei 110 bis 130°C in Pyridin löst und durch Abkühlen wieder ausfällt.

Die β-Modifikation entsteht beispielsweise, wenn man Rohpigment der Formel (I) in Dimethylformamid (DMF), N-Methylpyrrolidon (NMP) oder einer Mischung aus DMF oder NMP mit Wasser auf 135 bis 160°C erhitzt. Das erhaltene kristalline, grünstichig gelbe Pigment besitzt einen brillanten Farbton, hohe Deckkraft und Farbstärke, sehr gute Lösemittelbeständigkeit und exzellente Licht- und Wetterechtheit.

Die gelbe γ-Modifikation erhält man beispielsweise, wenn man ein Pigment der Formel (I) in der β-Modifikation bei 170 bis 190°C in o-Dichlorbenzol löst und durch Abkühlen wieder ausfällt.

Die gelbe δ-Modifikation erhält man beispielsweise, wenn man Pigment der Formel (I) in der β-Phase bei 180 bis 200°C in Dimethylsulfoxid löst und durch Abkühlen langsam kristallisieren lässt. Die δ-Modifikation entsteht auch, wenn als Lösemittel. Nitrobenzol bei 140 bis 210°C statt Dimethylsulfoxid verwendet wird.

Die ζ-Modifikation erhält man beispielsweise, wenn man Pigment der Formel (I) in Form der β-Phase bei 135 bis 160°C in Dimethylformamid löst und die Lösung nach dem Abkühlen auf unter 50°C mit Methanol überschichtet. Dabei kristallisiert gelbes Pigment in der ζ-Modifikation.

Die η-Modifikation erhält man beispielsweise, wenn man amorphes Rohpigment der Formel (I) in o-Dichlorbenzol auf 170 bis 190°C erhitzt, ohne es vollständig zu lösen und anschließend wieder abkühlt. Das Pigment besitzt einen brillanten grünstichig gelben Farbton, eine hohe Deckkraft und Farbstärke, sowie sehr gute Lösemittel-, Licht- und Wetterechtheit.

In Abhängigkeit von der Reinheit der Edukte, den Konzentrationen, den angewandten Temperaturen und Temperaturverläufen, einer eventuellen Nachbehandlung, dem Druck, der Anwesenheit von Verunreinigungen oder Additiven und der Gegenwart von Impfkristallen können die Kristallmodifikationen in reiner Form oder eine Mischung der verschiedenen Modifikationen entstehen.

Eine reine oder überwiegend reine Modifikation entsteht bevorzugt, wenn man von einer Lösung ausgeht, in der bereits Impfkristalle oder Kristallkeime der gewünschten Modifikation vorhanden sind, und wenn man diese Lösung so langsam abkühlt bzw. ein zweites Lösemittel so langsam zugibt, dass die Übersättigung in einem Bereich gehalten wird, in dem die Kristallwachstumsgeschwindigkeit relativ hoch, die Kristallkeimbildungsgeschwindigkeit jedoch relativ gering ist, so dass die vorhandenen Kristallkeime unter Beibehaltung der Modifikation wachsen. Der Einsatz eines mechanischen Rührers kann von Vorteil sein, da er vorhandene Kristalle der gewünschten Modifikation in viele kleinere Bruchstücke zerschlägt, die dann wieder als Kristallkeime für die gewünschte Modifikation dienen (sogenannte Sekundärnukleation).
Wenn die Übersättigung höher ist, z.B. weil die Lösung schneller abgekühlt wird oder ein zweites Lösemittel schneller zugegeben wird, ist die Kristallkeimbildungsgeschwindigkeit viel höher, so dass spontan viele Kristallkeime verschiedener Modifikationen entstehen können; dabei erhält man vorzugsweise Mischungen verschiedener Modifikationen.

Gegenstand der Erfindung ist auch eine Mischung des Disazofarbmittels der Formel (I), die mindestens 10 %, vorzugsweise mindestens 25 %, insbesondere mindestens 50 %, besonders bevorzugt mindestens 75 %, ganz besonders bevorzugt mindestens 90% der α-Modifikation, der β-Modifikation, der γ-Modifikation, der δ-Modifikation, der ζ-Modifikation, der η-Modifikation oder einer Mischung aus zwei, drei, vier, fünf oder sechs dieser Modifikationen enthält.

Zur Erleichterung der Herstellung der gewünschten Modifikation, zur Stabilisierung der gewünschten Modifikation, zur Verbesserung der coloristischen Eigenschaften und zur Erzielung bestimmter coloristischer Effekte können an beliebigen Stellen des Verfahrens Pigmentdispergatoren, oberflächenaktive Mittel, Entschäumer, Extender oder andere Zuschlagstoffe zugesetzt werden. Es können auch Mischungen dieser Zusatzstoffe verwendet werden. Die Zugabe der Zusatzstoffe kann auf einmal oder in mehreren Portionen erfolgen. Die Zusatzstoffe können an jedem Punkt der Synthese oder der verschiedenen Nachbehandlungen (Erwärmen mit einem Lösemittel, Umkristallisieren, Mahlen, Kneten), oder nach den Nachbehandlungen zugegeben werden. Der am besten geeignete Zeitpunkt muss zuvor durch orientierende Versuche ermittelt werden.

Je nach gewünschtem Anwendungsbereich kann es sinnvoll sein, das erhaltene Pigment einer mechanischen Feinverteilung zu unterwerfen. Die Feinverteilung kann durch Nass- oder Trockenmahlung erfolgen.

Pigmente der Formel (I) in den erfindungsgemäßen α-, β-, γ-, δ-, ζ- oder η-Modifikationen eignen sich zum Pigmentieren von Lacken und Kunststoffen, zur Herstellung von Druckfarben und wässrigen oder lösemittelhaltigen Pigmentpräparationen und zur Saatguteinfärbung.
Pigmente der Formel (I) in der β- oder η-Modifikation verfügen über eine hohe Farbstärke, eine außergewöhnlich gute Licht- und Wetterbeständigkeit und zeichnen sich durch brillante grünstichig-gelbe Färbungen aus. Sie sind daher besonders zum Einfärben von Lacken geeignet.

Die erfindungsgemäßen Modifikationen des Pigments der Formel (I) sind geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Latextoner, Polymerisationstoner sowie Spezialtoner.

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Desweiteren sind die erfindungsgemäßen Modifikationen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Modifikationen als Farbmittel in Tinten, vorzugsweise Ink-Jet Tinten, wie z.B. auf wäßriger oder nichtwäßriger Basis, Mikroemulsionstinten sowie in solchen Tinten, die nach dem hot-melt-Verfahren arbeiten, geeignet.

Ink-Jet-Tinten enthalten im allgemeinen insgesamt 0,5 bis 15 Gew.-%, vorzugsweise 1,5 bis 8 Gew.-%, (trocken gerechnet) einer oder mehrerer der erfindungsgemäßen Modifikationen.
Mikroemulsionstinten basieren auf organischen Lösemitteln, Wasser und ggf. einer zusätzlichen hydrotropen Substanz (Grenzflächenvermittler). Mikroemulsionstinten enthalten 0,5 bis 15 Gew.-%, vorzugsweise 1,5 bis 8 Gew.-%, einer oder mehrerer der erfindungsgemäßen Modifikationen, 5 bis 99 Gew.-% Wasser und 0,5 bis 94,5 Gew.-% organisches Lösungsmittel und/oder hydrotrope Verbindung.

"Solvent based" Ink-Jet-Tinten enthalten vorzugsweise 0,5 bis 15 Gew.-% einer oder mehrerer erfindungsgemäßer Modifikationen, 85 bis 99,5 Gew.-% organisches Lösungsmittel und/oder hydrotrope Verbindungen.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im wesentlichen aus 20 bis 90 Gew.-% Wachs und 1 bis 10 Gew.-% einer oder mehrerer der erfindungsgemäßen Modifikationen. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B.

Kristallisation der Wachse) sowie 0 bis 2 Gew.-% Antioxidans enthalten sein. Typische Zusatzstoffe und Hilfsmittel sind z.B. in US-PS 5,560,765 beschrieben.

Außerdem sind die erfindungsgemäßen Modifikationen auch geeignet als Farbmittel für Farbfilter, sowohl für die additive wie für die subtraktive Farberzeugung, sowie zur Einfärbung von Saatgut.

In den folgenden Beispielen sind Teile und Prozentangaben auf das Gewicht bezogen. Die Bestimmung der Kristallmodifikation der erhaltenen Produkte erfolgt durch Röntgenpulverdiffraktometrie.

### Beispiele:

### Vergleichsbeispiel 1: Synthese von Rohpigment

Aminoterephthalsäuredimethylester wird nach dem Verfahren analog DE-A-2 058 849, Beispiel 54 diazotiert und mit 2-Chlor-1,4-N,N'-diacetessigphenylendiamin gekuppelt. Man erhält ein rötlich gelbes amorphes Rohpigment der chemischen Struktur (I), dem keine Kristallmodifikation zugeordnet werden kann.

### Vergleichsbeispiel 2: Finish nach CS-A-266 632

Amorphes Rohpigment der Formel (I) aus Vergleichsbeispiel 1 wird in Ethanol suspendiert, im Autoklaven auf 130°C erhitzt und für 8 Stunden gerührt. Nach dem Abkühlen wird das Produkt abfiltriert und gewaschen. Man erhält ein weitgehend amorphes rötlich gelbes Pigment der chemischen Struktur (I), dem keine Kristallmodifikation zugeordnet werden kann.

### Beispiel 1: Herstellung der β-Modifikation

Amorphes Pigment der Formel (I) wird als wässriger Presskuchen in Dimethylformamid suspendiert, Wasser bis zur Sumpftemperatur von 140°C abdestilliert und 30 min gerührt. Nach dem Abkühlen wird filtriert und gewaschen. Man erhält ein kristallines grünstichig gelbes Pigment der chemischen Struktur (I) in der β-Modifikation.

### Beispiel 2: Herstellung der β-Modifikation

Amorphes Pigment der Formel (I) wird in N-Methylpyrrolidon suspendiert und 3 Stunden bei 150°C gerührt, abgekühlt, filtriert und gewaschen. Man erhält ein kristallines grünstichig gelbes Pigment der chemischen Struktur (I) in der β-Modifikation.

### Beispiel 3: Herstellung der α-Modifikation

Ein Pigment der Formel (I) in der β-Modifikation wird bei 120°C in siedendem Pyridin gelöst und durch Abkühlen der Lösung langsam wieder ausgefällt. Nach Filtration und Waschen erhält man ein kristallines gelbes Pigment der chemischen Struktur (I) in der α-Modifikation.

### Beispiel 4: Herstellung der γ-Modifikation

Pigment der Formel (I) in der β-Modifikation wird bei 180°C in siedendem o-Dichlorbenzol gelöst und durch Abkühlen der Lösung langsam wieder ausgefällt. Nach Filtration und Waschen erhält man ein kristallines gelbes Pigment der chemischen Struktur (I) in der γ-Modifikation.

### Beispiel 5: Herstellung der δ-Modifikation

Pigment der Formel (I) in der β-Modifikation wird in siedendem Dimethylsulfoxid bei 190°C gelöst. Beim Abkühlen kristallisiert ein Feststoff aus, der abfiltriert und getrocknet wird. Man erhält ein kristallines gelbes Pigment der chemischen Struktur (I) in der δ-Modifikation.

### Beispiel 6: Herstellung der δ-Modifikation

Pigment der Formel (I) in der β-Modifikation wird bei 155°C in Nitrobenzol gelöst und durch langsames Abkühlen wieder ausgefällt. Nach Filtration und Waschen erhält man ein kristallines gelbes Pigment der chemischen Struktur (I) in der δ-Modifikation.

### Beispiel 7: Herstellung der ζ-Modifikation

Pigment der Formel (I) in der β-Modifikation wird bei 155°C in siedendem Dimethylformamid gelöst und nach dem Abkühlen mit der fünffachen Menge Methanol überschichtet. Dabei kristallisiert ein gelber Feststoff aus, der isoliert wird. Man erhält ein kristallines gelbes Pigment der chemischen Struktur (I) in der ζ-Modifikation.

### Beispiel 8: Herstellung der η-Modifikation

Amorphes Pigment der Formel (I) wird in 1,2-Dichlorbenzol suspendiert und 3 Stunden bei 170°C gerührt. Anschließend wird abgekühlt, filtriert und gewaschen. Man erhält ein kristallines gelbes Pigment der chemischen Struktur (I) in der η-Modifikation.

### Anwendungsbeispiele:

5 Teile des Pigments aus Beispiel 1 werden in 95 Teile eines aromatenhaltigen Alkydmelaminharzlackes dispergiert.

Man erhält Ausfärbungen mit einem brillanten, grünstichig-gelben Farbton sowie einer hohen Farbstärke und sehr guter Deckkraft. Im Vergleich dazu sind die Lacke, die mit Pigmenten aus den Vergleichsbeispielen 1 und 2 hergestellt wurden, deutlich röter und trüber im Farbton. Außerdem ist deren Deckkraft gering, sie sind nur schwer dispergierbar und die rheologischen Eigenschaften der Lacke sind schlecht. Aus anwendungstechnischer Sicht sind diese Pigmente den erfindungsgemäßen Modifikationen deutlich unterlegen.

## Patentansprüche

1. Verfahren zur Herstellung kristalliner Modifikationen eines Disazo-Farbmittels der Formel (I), **dadurch gekennzeichnet, dass** man auf eine Verbindung der Formel (I) oder ein Tautomer, ein cis/trans-Isomer oder ein tautomeres cis/trans-Isomer der Verbindung der Formel (I) ein oder mehrere Lösemittel aus der Gruppe Dimethylformamid, N-Methylpyrrolidon, Dimethylsulfoxid, C₄-C₂₀-Alkohol, 1,2-Dichlorbenzol, Pyridin, Nitrobenzol oder eine Kombination dieser Lösemittel mit Wasser, wobei der Wassergehalt 0 bis 90 Gew.-% betragen kann, bei einer Temperatur von mindestens 100°C einwirken läßt.

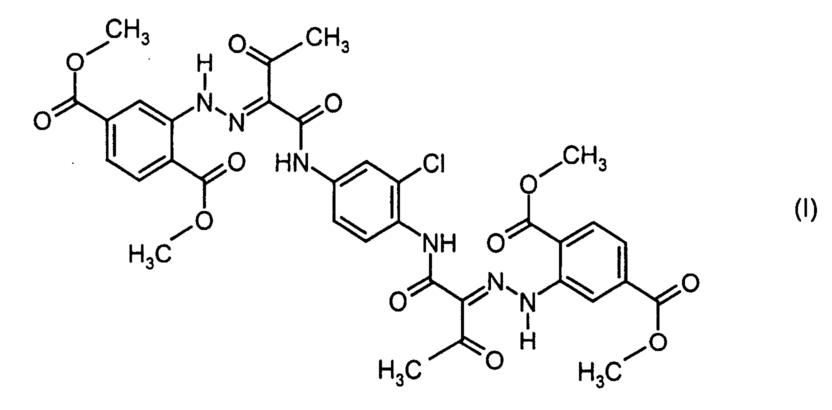

2. Verfahren gemäß Anspruch 1, **dadurch gekennzeichnet, dass** man das Lösemittel bei einer Temperatur von 135 bis 250°C, bevorzugt bei 150 bis 200°C, einwirken läßt.

3. Verfahren gemäß Anspruch 1 oder 2, **dadurch gekennzeichnet, dass** man das Lösemittel für 1 Minute bis 24 Stunden, vorzugsweise 5 Minuten bis 10 Stunden, insbesondere 10 min bis 5 Stunden einwirken läßt.

4. Ein gelbes Disazo-Farbmittel der Formel (I), **dadurch gekennzeichnet, dass** dessen Röntgenpulverdiagramm folgende charakteristischen Reflexe aufweist (Cu-K_{α}-Strahlung, 2Θ-Werte in Grad, d-Werte in Å⁻¹):
| α-Modifikation: | 2Θ | d | relative Intensität |
|---|---|---|---|
| | 6.1 | 14.6 | 100 |
| | 8.2 | 10.8 | 34 |
| | 9.0 | 9.9 | 13 |
| | 14.1 | 6.3 | 15 |
| | 15.2 | 5.8 | 6 |
| | 15.8 | 5.6 | 12 |
| | 17.0 | - 5.2 | 6 |
| | 22.1 | 4.0 | 8 |
| | 23.6 | 3.8 | 8 |
| | 24.0 | 3.7 | 15 |
| | 24.8 | 3.6 | 8 |
| | 25.3 | 3.5 | 52 |
| | 26.1 | 3.4 | 29 |
| | 27.3 | 3.3 | 40 |
| | 28.8 | 3.1 | 17 |
oder
| β-Modifikation: | 20 | d | relative Intensität |
|---|---|---|---|
| | 9.0 | 21.6 | 44 |
| | 10.6 | 8.3 | 7 |
| | 15.1 | 5.8 | 8 |
| | 16.0 | 5.5 | 6 |
| | 16.5 | 5.4 | 9 |
| | 19.5 | 4.5 | 8 |
| | 22.1 | 4.0 | 11 |
| | 26.9 | 3.3 | 100 |
| | 27.7 | 3.2 | 17 |
oder
| γ-Modifikation: | 2Θ | d | relative Intensität |
|---|---|---|---|
| | 5.9 | 14.9 | 98 |
| | 8.0 | 11.1 | 25 |
| | 8.7 | 10.1 | 9 |
| | 9.6 | 9.2 | 9 |
| | 11.8 | 7.5 | 11 |
| | 13.8 | 6.4 | 14 |
| | 14.9 | 5.9 | 7 |
| | 15.5 | 5.7 | 13 |
| | 16.6 | 5.3 | 11 |
| | 17.6 | 5.0 | 8 |
| | 18.3 | 4.9 | 7 |
| | 22.8 | 3.9 | 9 |
| | 24.1 | 3.7 | 17 |
| | 24.4 | 3.6 | 24 |
| | 25.5 | 3.5 | 100 |
| | 26.1 | 3.4 | 17 |
| | 26.4 | 3.4 | 30 |
| | 27.2 | 3.3 | 32 |
| | 27.4 | 3.2 | 47 |
| | 29.0 | 3.1 | 20 |
oder
| δ-Modifikation: | 2Θ | d | relative Intensität |
|---|---|---|---|
| | 5.8 | 15.2 | 63 |
| | 7.9 | 11.2 | 12 |
| | 9.4 | 9.4 | 6 |
| | 11.6 | 7.6 | 16 |
| | 13.4 | 6.6 | 6 |
| | 15.1 | 5.9 | 9 |
| | 16.4 | 5.4 | 9 |
| | 17.2 | 5.2 | 8 |
| | 18.0 | 4.9 | 8 |
| | 23.2 | 3.8 | 5 |
| | 23.4 | 3.8 | 5 |
| | 23.7 | 3.8 | 7 |
| | 24.3 | 3.7 | 17 |
| | 24.6 | 3.6 | 13 |
| | 25.5 | 3.5 | 100 |
| | 25.8 | 3.4 | 21 |
| | 26.4 | 3.4 | 22 |
| | 26.9 | 3.3 | 22 |
| | 27.3 | 3.3 | 41 |
| | 28.6 | 3.1 | 7 |
| | 28.8 | 3.1 | 11 |
oder
| ζ-Modifikation: | 2Θ | d | relative Intensität |
|---|---|---|---|
| | 7.0 | 12.6 | 7 |
| | 8.9 | 9.9 | 23 |
| | 11.2 | 7.9 | 10 |
| | 11.9 | 7.4 | 48 |
| | 13.2 | 6.7 | 6 |
| | 14.0 | 6.3 | 7 |
| | 15.1 | 5.9 | 26 |
| | 17.2 | 5.1 | 37 |
| | 18.0 | 4.9 | 14 |
| | 18.2 | 4.9 | 27 |
| | 21.5 | 4.1 | 33 |
| | 21.8 | 4.1 | 27 |
| | 22.6 | 3.9 | 13 |
| | 23.9 | 3.7 | 100 |
| | 24.7 | 3.6 | 13 |
| | 25.2 | 3.5 | 17 |
| | 25.9 | 3.4 | 7 |
| | 26.9 | 3.3 | 76 |
| | 27.1 | 3.3 | 92 |
| | 27.8 | 3.2 | 7 |
| | 29.9 | 3.0 | 6 |
| | 31.1 | 2.9 | 7 |
| | 31.7 | 2.8 | 9 |
| | 32.3 | 2.8 | 7 |
| | 33.0 | 2.7 | 8 |
oder
| η-Modifikation: | 2Θ | d | relative Intensität |
|---|---|---|---|
| | 9.0 | 9.9 | 60 |
| | 11.5 | 7.7 | 6 |
| | 14.1 | 6.3 | 6 |
| | 16.0 | 5.5 | 23 |
| | 20.1 | 4.4 | 7 |
| | 21.5 | 4.1 | 16 |
| | 26.8 | 3.3 | 100 |
| | 27.5 | 3.2 | 7 |
| | 27.9 | 3.2 | 12 |

5. Eine Mischung des Disazo-Farbmittls der Formel (I), die mindestens 10 %, vorzugsweise mindestens 25 %, insbesondere mindestens 50 %, besonders bevorzugt mindestens 75 %, ganz besonders bevorzugt mindestens 90% der in Anspruch 4 definierten α-Modifikation, β-Modifikation, γ-Modifikation, δ-Modifikation, ζ-Modifikation, η-Modifikation oder eine Mischung aus zwei, drei, vier, fünf oder sechs dieser Modifikationen enthält.

6. Verwendung des Disazo-Farbmittels der Formel (I) gemäß Anspruch 4 oder 5 zum Pigmentieren von Lacken, Kunststoffen, Druckfarben, elektrophotographischen Tonern und Entwicklern, Pulverlacken, Tinten, vorzugsweise Ink-Jet-Tinten, wässrigen und nichtwässrigen Pigmentpräparationen, Farbfiltern und zum Einfärben von Saatgut.

## Claims

1. A process for preparing crystal polymorphs of a disazo colorant of the formula (I), which comprises causing one or more solvents from the group consisting of dimethylformamide, N-methylpyrrolidone, dimethyl sulfoxide, C₄-C₂₀ alcohol, 1, 2-dichlorobenzene, pyridine, and nitrobenzene, or combinations of these solvents with water, the water content being from 0 to 90% by weight, to act on a compound of the formula (I) or on a tautomer, a cis/trans isomer or a tautomeric cis/trans isomer of the compound of the formula (I) at a temperature of at least 100°C.

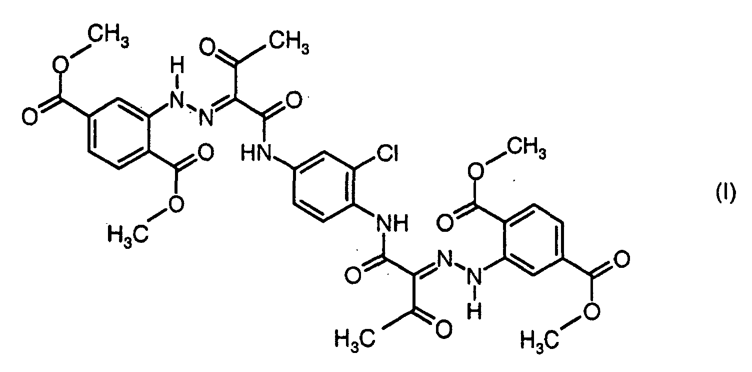

2. The process as claimed in claim 1, wherein the solvent is caused to act at a temperature of from 135 to 250°C, preferably from 150 to 200°C.

3. The process as claimed in claim 1 or 2, wherein the solvent is caused to act for from 1 minute to 24 hours, preferably from 5 minutes to 10 hours, in particular from 10 minutes to 5 hours.

4. A yellow disazo colorant of the formula (I) whose X-ray powder diagram features the following characteristic reflections (Cu-K_{α} radiation, 2Θ in degrees, d in Å⁻¹) :
| α polymorph: | 2Θ | d | relative intensity |
|---|---|---|---|
| | 6.1 | 14.6 | 100 |
| | 8.2 | 10.8 | 34 |
| | 9.0 | 9.9 | 13 |
| | 14.1 | 6.3 | 15 |
| | 15.2 | 5.8 | 6 |
| | 15.8 | 5.6 | 12 |
| | 17.0 | 5.2 | 6 |
| | 22.1 | 4.0 | 8 |
| | 23.6 | 3.8 | 8 |
| | 24.0 | 3.7 | 15 |
| | 24.8 | 3.6 | 8 |
| | 25.3 | 3.5 | 52 |
| | 26.1 | 3.4 | 29 |
| | 27.3 | 3.3 | 40 |
| | 28.8 | 3.1 | 17 |
or
| β polymorph: | 2Θ | d | relative intensity |
|---|---|---|---|
| | 9.0 | 21.6 | 44 |
| | 10.6 | 8.3 | 7 |
| | 15.1 | 5.8 | 8 |
| | 16.0 | 5.5 | 6 |
| | 16.5 | 5.4 | 9 |
| | 19.5 | 4.5 | 8 |
| | 22.1 | 4.0 | 11 |
| | 26.9 | 3.3 | 100 |
| | 27.7 | 3.2 | 17 |
or
| γ polymorph: | 2Θ | d | relative intensity |
|---|---|---|---|
| | 5.9 | 14.9 | 98 |
| | 8.0 | 11.1 | 25 |
| | 8.7 | 10.1 | 9 |
| | 9.6 | 9.2 | 9 |
| | 11.8 | 7.5 | 11 |
| | 13.8 | 6.4 | 14 |
| | 14.9 | 5.9 | 7 |
| | 15.5 | 5.7 | 13 |
| | 16.6 | 5.3 | 11 |
| | 17.6 | 5.0 | 8 |
| | 18.3 | 4.9 | 7 |
| | 22.8 | 3.9 | 9 |
| | 24.1 | 3.7 | 17 |
| | 24.4 | 3.6 | 24 |
| | 25.5 | 3.5 | 100 |
| | 26.1 | 3.4 | 17 |
| | 26.4 | 3.4 | 30 |
| | 27.2 | 3.3 | 32 |
| | 27.4 | 3.2 | 47 |
| | 29.0 | 3.1 | 20 |
or
| δ polymorph: | 2Θ | d | relative intensity |
|---|---|---|---|
| | 5.8 | 15.2 | 63 |
| | 7.9 | 11.2 | 12 |
| | 9.4 | 9.4 | 6 |
| | 11.6 | 7.6 | 16 |
| | 13.4 | 6.6 | 6 |
| | 15.1 | 5.9 | 9 |
| | 16.4 | 5.4 | 9 |
| | 17.2 | 5.2 | 8 |
| | 18.0 | 4.9 | 8 |
| | 23.2 | 3.8 | 5 |
| | 23.4 | 3.8 | 5 |
| | 23.7 | 3.8 | 7 |
| | 24.3 | 3.7 | 17 |
| | 24.6 | 3.6 | 13 |
| | 25.5 | 3.5 | 100 |
| | 25.8 | 3.4 | 21 |
| | 26.4 | 3.4 | 22 |
| | 26.9 | 3.3 | 22 |
| | 27.3 | 3.3 | 41 |
| | 28.6 | 3.1 | 7 |
| | 28.8 | 3.1 | 11 |
or
| ζ polymorph: | 2Θ | d | relative intensity |
|---|---|---|---|
| | 7.0 | 12.6 | 7 |
| | 8.9 | 9.9 | 23 |
| | 11.2 | 7.9 | 10 |
| | 11.9 | 7.4 | 48 |
| | 13.2 | 6.7 | 6 |
| | 14.0 | 6.3 | 7 |
| | 15.1 | 5.9 | 26 |
| | 17.2 | 5.1 | 37 |
| | 18.0 | 4.9 | 14 |
| | 18.2 | 4.9 | 27 |
| | 21.5 | 4.1 | 33 |
| | 21.8 | 4.1 | 27 |
| | 22.6 | 3.9 | 13 |
| | 23.9 | 3.7 | 100 |
| | 24.7 | 3.6 | 13 |
| | 25.2 | 3.5 | 17 |
| | 25.9 | 3.4 | 7 |
| | 26.9 | 3.3 | 76 |
| | 27.1 | 3.3 | 92 |
| | 27.8 | 3.2 | 7 |
| | 29.9 | 3.0 | 6 |
| | 31.1 | 2.9 | 7 |
| | 31.7 | 2.8 | 9 |
| | 32.3 | 2.8 | 7 |
| | 33.0 | 2.7 | 8 |
or
| η polymorph: | 2Θ | d | relative intensity |
|---|---|---|---|
| | 9.0 | 9.9 | 60 |
| | 11.5 | 7.7 | 6 |
| | 14.1 | 6.3 | 6 |
| | 16.0 | 5.5 | 23 |
| | 20.1 | 4.4 | 7 |
| | 21.5 | 4.1 | 16 |
| | 26.8 | 3.3 | 100 |
| | 27.5 | 3.2 | 7 |
| | 27.9 | 3.2 | 12 |

5. A mixture of the disazo colorant of the formula (I) comprising at least 10%, preferably at least 25%, in particular at least 50%, with particular preference at least 75%, with very particular preference at least 90%, of the α polymorph, β polymorph, γ polymorph, δ polymorph, ζ polymorph, η polymorph, defined in claim 4, or a mixture of two, three, four, five or six of these polymorphs.

6. The use of the disazo colorant of the formula (I) as claimed in claim 4 or 5 for pigmenting coating materials, plastics, printing inks, electrophotographic toners and developers, powder coating materials, inks, preferably ink-jet inks, aqueous and nonaqueous pigment preparations, color filters, and for coloring seed.

## Revendications

1. Procédé pour la préparation de modifications cristallines d'un colorant disazoïque de formule (1), **caractérisé en ce qu'**on fait agir à une température d'au moins 100 °C sur un composé de formule (1) ou un tautomère, un isomère cis-trans ou un isomère cis-trans tautomère du composé de formule (1), un ou plusieurs solvants du groupe diméthylformamide, N-méthylpyrrolidone, diméthylsulfoxyde, alcool en C₄-C₂₀, 1,2-dichlorobenzène, pyridine, nitrobenzène ou une combinaison de ces solvants avec l'eau, dans lequel la teneur en eau peut s'élever de 0 à 90 % en poids.

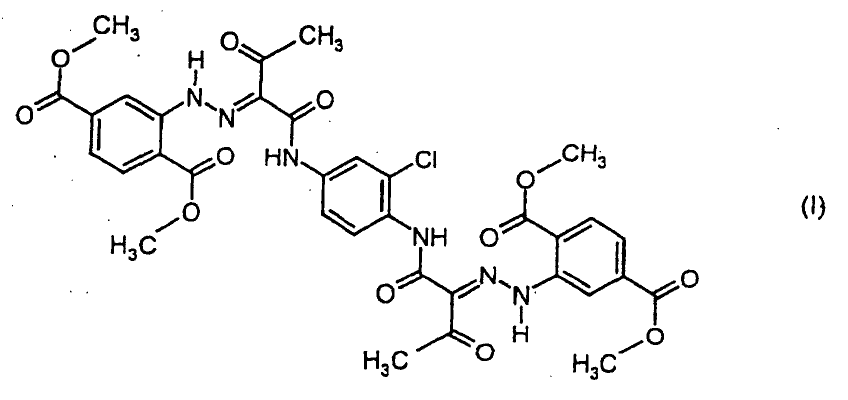

2. Procédé selon la revendication 1, **caractérisé en ce qu'**on fait agir le solvant à une température de 135 à 250 °C, de préférence de 150 à 200 °C.

3. Procédé selon la revendication 1 ou 2, **caractérisé en ce qu'**on fait agir le solvant pendant 1 minute à 24 heures, de préférence de 5 minutes à 10 heures, en particulier de 10 min à 5 heures.

4. Colorant disazoïque jaune de formule (1), **caractérisé en ce que** son diagramme de poudre de rayons X présente les réflexions caractéristiques suivantes (raie Cu-K_{α}, valeurs 2Θ en degré, valeurs de d en Å⁻¹) :
| FORME CRISTALLINE α | 2Θ | d | Intensité relative |
|---|---|---|---|
| | 6,1 | 14, 6 | 100 |
| | 8, 2 | 10,8 | 34 |
| | 9,0 | 9, 9 | 13 |
| | 14,1 | 6, 3 | 15 |
| | 15,2 | 5,8 | 6 |
| | 15,8 | 5, 6 | 12 |
| | 17,0 | 5,2 | 6 |
| | 22,1 | 4,0 | 8 |
| | 23, 6 | 3,8 | 8 |
| | 24,0 | 3,7 | 15 |
| | 24,8 | 3, 6 | 8 |
| | 25,3 | 3, 5 | 52 |
| | 26,1 | 3,4 | 29 |
| | 27,3 | 3, 3 | 40 |
| | 28,8 | 3,1 | 17 |
ou
| FORME CRISTALLINE β | 2Θ | d | Intensité relative |
|---|---|---|---|
| | 9,0 | 21,6 | 44 |
| | 10,6 | 8, 3 | 7 |
| | 15,1 | 5,8 | 8 |
| | 16,0 | 5, 5 | 6 |
| | 16,5 | 5,4 | 9 |
| | 19,5 | 4, 5 | 8 |
| | 22,1 | 4,0 | 11 |
| | 26,9 | 3,3 | 100 |
| | 27,7 | 3, 2 | 17 |
ou
| FORME CRISTALLINE y | 2Θ | d | Intensité relative |
|---|---|---|---|
| | 5,9 | 14,9 | 98 |
| | 8, 0 | 11,1 | 25 |
| | 8,7 | 10,1 | 9 |
| | 9, 6 | 9,2 | 9 |
| | 11, 8 | 7, 5 | 11 |
| | 13, 8 | 6, 4 | 14 |
| | 14,9 | 5,9 | 7 |
| | 15, 5 | 5, 7 | 13 |
| | 16,6 | 5, 3 | 11 |
| | 17,6 | 5,0 | 8 |
| | 18, 3 | 4,9 | 7 |
| | 22, 8 | 3,9 | 9 |
| | 24,1 | 3,7 | 17 |
| | 24,4 | 3,6 | 24 |
| | 25, 5 | 3, 5 | 100 |
| | 26,1 | 3,4 | 17 |
| | 26,4 | 3,4 | 30 |
| | 27,2 | 3,3 | 32 |
| | 27,4 | 3,2 | 47 |
| | 29,0 | 3,1 | 20 |
ou
| FORME CRISTALLINE δ | 2Θ | d | Intensité relative |
|---|---|---|---|
| | 5,8 | 15,2 | 63 |
| | 7, 9 | 11, 2 | 12 |
| | 9,4 | 9,4 | 6 |
| | 11, 6 | 7, 6 | 16 |
| | 13,4 | 6, 6 | 6 |
| | 15,1 | 5, 9 | 9 |
| | 16,4 | 5,4 | 9 |
| | 17,2 | 5,2 | 8 |
| | 18,0 | 4,9 | 8 |
| | 23, 2 | 3,8 | 5 |
| | 23,4 | 3, 8 | 5 |
| | 23,7 | 3,8 | 7 |
| | 24, 3 | 3,7 | 17 |
| | 24, 6 | 3, 6 | 13 |
| | 25, 5 | 3, 5 | 100 |
| | 25, 8 | 3,4 | 21 |
| | 26,4 | 3,4 | 22 |
| | 26, 9 | 3,3 | 22 |
| | 27, 3 | 3,3 | 41 |
| | 28, 6 | 3,1 | 7 |
| | 28,8 | 3,1 | 11 |
ou
| FORME CRISTALLINE ζ | 2Θ | d | Intensité relative |
|---|---|---|---|
| | 7,0 | 12, 6 | 7 |
| | 8, 9 | 9, 9 | 23 |
| | 11,2 | 7, 9 | 10 |
| | 11, 9 | 7,4 | 48 |
| | 13,2 | 6,7 | 6 |
| | 14,0 | 6,3 | 7 |
| | 15,1 | 5, 9 | 26 |
| | 17, 2 | 5,1 | 37 |
| | 18, 0 | 4,9 | 14 |
| | 18, 2 | 4, 9 | 27 |
| | 21, 5 | 4,1 | 33 |
| | 21,8 | 4,1 | 27 |
| | 22,6 | 3, 9 | 13 |
| | 23, 9 | 3, 7 | 100 |
| | 24,7 | 3, 6 | 13 |
| | 25, 2 | 3, 5 | 17 |
| | 25, 9 | 3,4 | 7 |
| | 26, 9 | 3, 3 | 76 |
| | 27,1 | 3, 3 | 92 |
| | 27, 8 | 3, 2 | 7 |
| | 29, 9 | 3, 0 | 6 |
| | 31,1 | 2,9 | 7 |
| | 31, 7 | 2, 8 | 9 |
| | 32, 3 | 2, 8 | 7 |
| | 33, 0 | 2, 7 | 8 |
ou
| FORME CRISTALLINE η | 2Θ | d | Intensité relative |
|---|---|---|---|
| | 9, 0 | 9, 9 | 60 |
| | 11,5 | 7,7 | 6 |
| | 14,1 | 6, 3 | 6 |
| | 16, 0 | 5, 5 | 23 |
| | 20,1 | 4,4 | 7 |
| | 21, 5 | 4,1 | 16 |
| | 26, 8 | 3, 3 | 100 |
| | 27, 5 | 3, 2 | 7 |
| | 27, 9 | 3, 2 | 12 |

5. Mélange du colorant disazoïque de formule (1), qui contient au moins 10 %, de préférence au moins 25 %, en particulier au moins 50 %, de manière particulièrement préféré au moins 75 %, de manière tout à fait particulièrement préférée au moins 90 % de la forme α, la forme β, la forme γ, la forme δ, la forme ζ, la forme η définie à la revendication 4 ou un mélange de deux, trois, quatre, cinq ou six de ces formes cristallines.

6. Utilisation du colorant disazoïque de formule (1) selon la revendication 4 ou 5 pour la pigmentation de peintures, de matières synthétiques, d'encres d'impression, de toners et de révélateurs électrophotographiques, de peintures en poudre, d'encres, de préférence d'encre pour impression au jet d'encre, de préparations de pigments aqueuses et non aqueuses, de filtres colorés et pour la coloration de semis.
